# EUROPÄISCHE PATENTANMELDUNG

(11) **EP 3 636 215 A1**
(43) Veröffentlichungstag der Anmeldung: **15.04.2020**
(21) Anmeldenummer: 18200150.3
(22) Anmeldetag: 12.10.2018
(51) Int. Cl.: A61C 19/00, A61C 13/20, A61C 13/12

(54) **KÜHLVORRICHTUNG FÜR DENTALRESTAURATIONEN**

(71) Anmelder: Ivoclar Vivadent AG, 9494 Schaan (LI)
(72) Erfinder: Senti, Theresa, 9486 Schaanwald (LI)
(74) Vertreter: Splanemann

(57) **Zusammenfassung**

Es ist eine Kühlvorrichtung, insbesondere für Dentalrestaurationen, mit einem zu kühlenden Kühlobjekt (32), wie z.B. mit einer Dentalrestauration, insbesondere aus einer Keramik, und mit einem Kühlmedium (50) vorgesehen, das in thermischen Kontakt mit dem Kühlobjekt (32) bringbar ist. Es ist vorgesehen, dass die Kühlvorrichtung (10) einen Antrieb (12) aufweist, insbesondere einen Drehantrieb (12), der eine Bewegung des Kühlobjekts (32) gegenüber dem gasförmigen Kühlmedium (50) einleitet, welche wechselnde Bereiche des Kühlobjekts (32) je zuerst auf das Kühlmedium (50) treffen läßt.

## Beschreibung

Die Erfindung betrifft eine Kühlvorrichtung, gemäß dem Oberbegriff von Anspruch 1, sowie ein Verfahren zum Betrieb einer Kühlvorrichtung, gemäß dem Oberbegriff von Anspruch 14.

Dentalrestauration, insbesondere solche, die aus Keramik bestehen, werden in Dentalöfen mit einem vorgegebenen Brennzyklus erzeugt. Dieser umfasst typischerweise eine Aufheizperiode, eine Halteperiode und hieran anschließend eine Abkühlperiode.

Nachdem Dentalbrennöfen hochwertige Güter darstellen, ist eine gute Auslastung dieser und auch eine schnelle Zykluszeit des Brennzyklus wünschenswert.

Ein allzu großer Temperaturgradient kann jedoch zu Spannungsrissen führen, sodass die Hersteller von Dentalkeramiken genaue Temperaturkurven vorschreiben.

Für die Aufheizperiode ist es üblich, einen so genannten Vorwärmofen bereitzustellen, der die Dentalkeramik beispielsweise auf 700° Celsius bringt, bevor im Dentalbrennofen der eigentliche Brennzyklus einsetzt.

Insbesondere während des Abkühlens können Thermospannungen dazu führen, dass das Dentalrestaurationsteil ein Sprödbruch erfährt, oder zumindest einen Riss. Mikrorisse sind in sofern besonders kritisch, da sie häufig übersehen werden. In den Mikrorissen können sich im Mund des Patienten Bakterien ansammeln, die zu Infektionen führen können. Im wesentlichen wirken sich Mikrorisse bei keramischen Dentalrestaurationen negativ auf die Langzeitstabilität und die mechanischen Eigenschaften über die Tragedauer aus.

Um derartige Probleme zu vermeiden, wird typischerweise eine Abkühlrate mit Sicherheitsreserve gewählt, so dass keine Risse entstehen können.

Dies führt jedoch dazu, dass die Abkühlzeit deutlich länger ist als erwünscht, so dass sich kein kurzer Brennzyklus ergibt.

Das Abkühlen erfolgt häufig so, dass eine Brennhaube, in der der Brennraum ausgebildet ist, angehoben wird. Dies hat den Vorteil, das die Stellfläche, auf der die Dentalrestaurationsteile liegen, nicht durch eine vermeidbare Bewegung erschüttert wird.

Es ist auch vorgeschlagen worden, eine Zwangskühlung vorzunehmen, beispielsweise durch ein Gebläse. Ein solches hat jedoch den gravierenden Nachteil, dass die Abkühlung auf der Gebläseseite deutlich schneller erfolgt als auf der von dem Gebläse abgewandten Seite, so dass erhebliche Thermospannungen induziert werden, die zu Brüchen des Dentalrestaurationsteils führen können.

Eine demgegenüber verbesserte Lösung zur Verhinderung der asymmetrischen Abkühlung lässt ich der DE 195 42 9841C1 entnehmen. Bei dieser Lösung wird die Brennhaube nicht lediglich hoch geschwenkt, sondern zunächst vertikal angehoben und dann erst verschwenkt. Dadurch lässt sich ein gleichmäßiger Luftzutritt von allen Seiten und damit eine thermospannungsfreie Abkühlung ermöglichen. Diese Lösung erfordert jedoch nach wie vor einen vergleichsweise langen Abkühlungszeitraum.

Demgegenüber liegt der Erfindung die Aufgabe zugrunde, seine Kühlvorrichtung gemäß dem Oberbegriff von Anspruch 1 sowie ein zugehöriges Verfahren gemäß dem Oberbegriff von Anspruch 14 zu schaffen, die hinsichtlich der Kühleffizienz verbessert sind, ohne dass thermische Spannungen entstehen würden.

Diese Aufgabe wird durch Anspruch 1 beziehungsweise 14 gelöst. Vorteilhafte Weiterbildungen ergeben sich auch den Unteransprüchen.

Erfindungsgemäß ist es vorgesehen, dass das Kühlobjekt, also beispielsweise die Dentalrestauration oder der sonstige zu kühlende Gegenstand, aktiv bewegt wird. Durch die Bewegung in der Umgebungsluft erfolgt ein Wärmetausch zwischen der Umgebungsluft und dem Kühlobjekt, der zu einem Abkühlprozess führt, der gegenüber der ruhenden Abkühlung deutlich schneller ist.

Überraschend ergibt sich bereits durch eine rein kreisförmige Bewegung des Kühlobjekts eine gleichförmige Kühlung, also nicht etwa eine einseitige Abkühlung nur der Stirnfläche. Unter Stirnfläche sei hier die Fläche verstanden, die in Bewegungsrichtung vorne ist. Dies liegt daran, dass gerade Dentalrestaurationen häufig nicht kugelig und auch insbesondere nicht tropfenförmig sind, sondern in einer gewissen Weise zerklüftet.

Dies führt dazu, dass die laminare Relativströmung unterbrochen wird, so dass Wirbel entstehen, die ebenfalls dem Wärmetausch dienen und als Sekundärströmung an dem Kühlobjekt eine nahezu gleichgroße Kühlwirkung entfalten wie die Primärströmung an der Stirnfläche.

In vorteilhafter Ausgestaltung ist es vorgesehen, dass wechselnde Bereiche des Kühlobjekts je zuerst auf das Kühlmedium treffen. Darunter ist zu verstehen, dass das Kühlobjekt sich selbst um eine Achse oder einen Punkt in ihm oder an ihm bewegt oder dreht, so das die Stirnfläche sich ändert. Die entsprechende Bewegung, die auch als Sekundärbewegung bezeichnet werden kann, ergibt sich in vielen Fällen automatisch.

Durch eine sich ändernde Rotationsgeschwindigkeit wird die Neigung des Kühlobjekts, dass sich die Stirnfläche ändert, gefördert. Es wird eine Art Taumelbewegung erzeugt.

Bevorzugt leitet die Kühlvorrichtung eine hinsichtlich 2 oder 3 Dimensionen stochastisch verteilte Relativbewegung zwischen dem Kühlobjekt und dem gasförmigen Kühlmedium ein. Dies geschieht in beliebiger geeigneter Weise, z.B. durch einen besonderen Antrieb für das Kühlobjekt, der auch Taumel- oder Schleuderbewegungen umfasst, durch Postionsverlagerungen des Kühlobjekts oder durch Geschwindiglkeitsänderungen des Antriebs, oder zum Beispiel, indem räumliche Unterschiede bei der Reibung innerhalb des Kühlmediums ausgenutzt werden.

Wenn die Dentalrestauration beispielsweise an einem biegeschlaffen Zugelement wie einem Seil in einer Kreisform bewegt wird, wird sie sich automatisch und stochastisch verteilt um die Seilachse drehen, so dass unterschiedliche Bereiche der Dentalrestauration als Stirnfläche wirken.

Das Kühlobjekt kann beim Beginn des erfahrungsgemäßen Kühlverfahrens durchaus ausgesprochen heiß sein, beispielsweise 1000° Celsius. In diesem Zustand ist die Temperaturdifferenz vergleichsweise hoch. Um zu verhindern, dass der Temperaturgradient zu groß ist, kann die Bewegung des Kühlobjekts durch das Kühlmedium langsam gestartet werden.

Die Startgeschwindigkeit kann beispielsweise zwischen 1cm pro Sekunde und 20cm pro Sekunde liegen.

Bei Bedarf ist es ohne weiteres möglich, den Antrieb beim Beginn des Kühlprozesse recht langsam loslaufen zu lassen und dann allmählich zu beschleunigen. Dies bewirkt eine allmähliche, schonende Kühlung zu Beginn des Kühlprozesses.

Bevorzugt ist eine Steuervorrichtung vorgesehen, die einen Antrieb der Kühlvorrichtung steuert. Dieser motorischer Antrieb erzeugt eine Kreisbewegung, eine elliptische Bewegung oder eine achtförmige Bewegung für das Kühlobjekt durch das Kühlmedium hindurch. Die einfachste Form ist die Kreisbewegung, die von einem elektrischen Motor als Antrieb eingeleitet wird. Wenn ein Halteelement für das Kühlobjekt wiederum ein Seil oder ein Draht ist, bewegt sich das Kühlobjekt aufgrund der Zentrifugalkraft automatisch in einer Kreisbahn.

Wenn die Temperatur deutlich geringer geworden ist, und beispielsweise bei 300° oder 400° Grad liegt, kann typischerweise die Geschwindigkeit des Kühlobjekts durch das Kühlmedium deutlich erhöht werden, beispielsweise auf 1 Meter pro Sekunde.

Wenn die Temperatur lediglich 80° Grad oder 100° Grad Celsius beträgt, lässt sich die Geschwindigkeit bei Bedarf noch weiter erhöhen, beispielsweise auf 5 Meter pro Sekunde.

Alternativ und in einer modifizierten Ausführungsform ist es vorgesehen, kurzerhand unterhalb einer Schwellentemperatur wie 80° Grad Celsius das Kühlobjekt in Wasser oder ein anderes Medium mit einer höheren Wärmeleitfähigkeit als Luft einzutauchen.

Dies kann unter Verwendung der erfindungsgemäßen Kühlvorrichtung erfolgen, beispielsweise, indem die Drehgeschwindigkeit des Antriebs deutlich verringert wird, so dass die Zentrifugalkraft sinkt, so dass das Kühlobjekt aufgrund der Erdanziehungskraft sich in einer Kreisbahn bewegt, die kleiner ist und weiter unten liegt.

An dieser Stelle kann dann ein Topf oder dergleichen mit dem zweiten Kühlmedium mit der höheren Wärmeleitfähigkeit angebracht sein, in die das Kühlobjekt dann eintaucht.

Bei der hier beschriebenen Ausgestaltung, bei der das Halteelement ein Seil oder einen Draht aufweist, ist erforderlich, das Kühlobjekt einseitig an dem Halteelement zu befestigen. Dies kann beispielsweise so realisiert sein, dass ein Drahtgeflecht oder ein Drahtgitter in Sackform vorgesehen ist, das mit dem Halteelement verbunden ist und das das Kühlobjekt aufnehmen kann.

Indem ein Geflecht oder ein Gitter für die Aufnahme verwendet wird, ist sichergestellt, dass das Kühlobjekt ausreichend von Luft umströmt wird.

In einer weiteren Ausgestaltung der erfindungsgemäßen Kühlvorrichtung ist es vorgesehen, nach einer gewissen Zeit wie beispielsweise 1 Minute oder 3 Minuten die Drehrichtung des Antriebs umzudrehen. Bei dieser Lösung wird der Wechsel der Bereiche des Kühlobjekts, die je zuerst auf das Kühlmedium treffen, dadurch erzielt, dass in der ersten Drehrichtung die gegen die Drehrichtung weisenden Bereiche als Stirnfläche fungieren, während in der zweiten Drehrichtung die gegenüberliegenden Bereiche als Stirnfläche fungieren.

Es versteht sich, dass bei dieser Lösung eine Taumelbewegung, wie sie für den Wechsel der Bereiche günstig sein kann, nicht unbedingt erforderlich ist. Ferner ist auch eine Bewegung um die Achse des Halteelements nicht erforderlich, um den Bereichswechsel zu bewirken.

In einer weiteren günstigen Ausgestaltung ist es vorgesehen, ein Netz, ein Geflecht oder ein Gitter oder eine Kombination dieser in der Draufsicht kreisrund auszugestalten und dieses um die Kreisachse zu drehen.

Im Querschnitt kann bei dieser Ausführungsform eine napfförmige oder auch torusförmige Bauweise vorgesehen sein. Ein Kühlobjekt oder auch mehrere Kühlobjekte lassen sich in dem insofern realisierte Gefäß einlegen und beim einschalten des Antriebs, der als Drehantrieb wirkt, bewegen.

In diesen Fällen wie auch in dem vor gestehend genannten Ausführungsbeispiel erfolgt die Bewegung des Kühlobjekts oder der Kühlobjekte in einer Kreisbahn. Die Bewegung erfolgt typischerweise so, dass das Kühlobjekt eine aktive Bewegung durch das Kühlmedium erfährt. Dieses verbleibt insofern ruhend oder statisch. Das Kühlmedium ist typischerweise Luft, aber es ist auch nicht ausgeschlossen, eine Flüssigkeit wie beispielsweise Wasser oder Alkohol als Kühlmedium zu verwenden.

Als Halteelement wird ein Netz oder Gitter verwendet. Dieses besteht aus temperaturfesten Drähten, die auch bei der Maximaltemperatur, in der das Kühlobjekt eingelegt wird, nicht schmelzen.

Die Maschen des Netzes oder Gitter sind so groß, dass das Kühlobjekt auch bei Belastung, also beispielsweise, wenn das Kühlmedium durch die Fliehkraft nach außen gegen das Netz oder Gitter gedrückt wird, die Maschen nicht durchdringen kann. Andererseits sind sie so groß, dass ein freier Durchtritt des Kühlmediums gegeben ist.

Es versteht sich, dass die genaue Ausgestaltung in weiten Bereichen anpassbar ist. Es ist auch beispielsweise möglich, ein mehrlagiges Netz oder Gitter mit geringer Maschenweite innen und zur Aussteifung mit größeren und stabilere Maschen außen zu verwenden.

Die Netze oder Gitter können auch austauschbar sein, sodass je nach Anwendungsfall eine Anpassung an beispielsweise die erforderliche Temperaturfestigkeit oder auch an die Größe des Kühlobjekts vorgenommen werden kann.

Das Netz, Geflecht oder Gitter ist typischerweise etwas nachgiebig, insbesondere durch die Fliehkraft Wirkung. Dadurch wölbt es sich an der Stelle, an der das Kühlobjekt zu liegen kommt, etwas stärker nach außen, was die Kühlwirkung noch verbessert.

Für die Optimierung der Kühlung ist eine Steuervorrichtung vorgesehen die auf den Antrieb wirkt. Beide gemeinsam bilden die Bewegungsvorrichtung für die Bewegung des Kühlobjekts im Kühlmedium.

Besonders günstig ist es, dass die Bewegung des Kühlobjekts in verschiedener Weise dafür gesorgt wird, das wechselnde Bereiche des Kühlobjekts je zuerst auf das Kühlmedium treffen. Diese Bereiche werden als Stirnfläche bezeichnet, sind also die Bereiche, die in Bewegungsrichtung des Kühlobjekts weisen. Wenn das Halteelement für die Aufnahme des Kühlobjekts napfförmig ausgestaltet ist, liegt das Kühlobjekt frei in diesem. Durch Geschwindigkeitsänderungen des Drehantriebs durch die Steuervorrichtung lässt sich dafür sorgen, das das Kühlobjekt immer mal wieder seine Position wechselt.

Wenn das Kühlobjekt in einem Netz eingebracht ist, das von einem biegeschlaffen Element geschleppt wird, entsteht häufig eine Taumelbewegung. Soweit diese sich nicht von selbst einstellt, kann durch den Drehantrieb dafür gesorgt werden, dass es zu einer Taumelbewegung kommt, oder mindestens um zu einer gewissen Drehbewegung um die Erstreckungsachse des biegeschlaffen Elements.

Bei der Ausgestaltung mit dem biegeschlaffen Element ist es auch möglich, den Antrieb so zu realisieren, dass sich eine beliebige andere Bewegung des Kühlobjekts durch das Kühlmedium einstellt. In Frage kommt beispielsweise ein eine achtförmige Bewegung oder auch eine elliptische Bewegung.

Das biegeschlaffe Element kann auch elastisch sein, so dass er sich durch die Fliehkraft bei höhere Geschwindigkeitselement verlängert und bei niedrigerer Geschwindigkeit wieder zusammenzieht.

Indem man die Geschwindigkeit ändert, kann es bei dieser Ausgestaltung auch zu Schleuderwirkungen kommen, ebenfalls mit sich ändernden Stirnflächen des Kühlobjekts.

Die erfindungsgemäße Steuervorrichtung ist bevorzugt so ausgelegt, dass sie den Besonderheiten des Kühlprozesses Rechnung trägt. Beispielsweise kann der Antrieb zunächst langsam angesteuert werden, so dass sich das Kühlobjekt beim Beginn des Kühlprozesses vergleichsweise langsam durch das Kühlmedium bewegt.

Der Antrieb kann also beispielsweise eine niedrige Drehzahl haben, so dass kein zu schnelles Abkühlen erfolgt. Durch kurzzeitiges noch weiteres Verlangsamen kann auch die Position des Kühlobjekts in dem Halteelement verändert werden.

Das Halteelement kann auch eine nach außen weisende Schrägfläche aufweisen, die so ausgestaltet ist, dass es bei höherer Fliehkraft,also größerer Drehgeschwindigkeit,die Schrägfläche herauf rollt, bis es am oberen Rand sicher gehalten ist. Bei Reduktion der Drehgeschwindigkeit rollt das Kühlobjekt aufgrund der Schwerkraft nach unten/einwärts, wobei sich hierdurch ebenfalls Bewegungen des Kühlobjekts ergeben, die dazu führen, dass wechselnde Bereiche des Kühlobjekts je zuerst auf das Kühlmedium treffen.

Bei fortschreitender Abkühlung des Kühlobjekts nimmt die Temperaturdifferenz zwischen dem Kühlmedium und dem Kühlobjekt ab. Um dennoch eine rasche Abkühlung zu gewährleisten, kann erfindungsgemäß die Antriebsgeschwindigkeit erhöht werden.

Es ist auch möglich, das Kühlmedium unterhalb einer bestimmten Temperatur des Kühlobjekts zu wechseln. Beispielsweise kann unterhalb des Halteelements mit dem Kühlobjekt ein Bottich oder Napf mit einer Flüssigkeit vorgesehen sein. Gegen Ende des Kühlprozesses wird dann kurzerhand das Halteelement mit dem Kühlobjekt im Bottich mit der Flüssigkeit abgesenkt, oder der Bottich wird soweit angehoben, dass das Halteelement und das Kühlobjekt eintauchen.

Als Flüssigkeit kommt hierfür eine beliebige geeignete Flüssigkeit in Betracht, beispielsweise Wasser oder Alkohol.

In eingetauchtem Zustand kann das Kühlobjekt entweder durch den Antrieb langsam durch das flüssige Kühlmedium bewegt werden, oder es verbleibt für kurze zeit in eingetauchtem Zustand , so dass es rasch auf die Temperatur der Flüssigkeit abkühlt.

Es ist auch möglich, nach Abkühlung des Kühlobjekts in der Flüssigkeit die Drehzahl des Antriebs kurzzeitig, beispielsweise für 10 Sekunden, erneut stark zu erhöhen. Dies dient der Trocknung des Kühlobjekts.

Weitere Vorteile, Einzelheiten und Merkmale ergeben sich aus den nachfolgenden Beschreibungen zweier Ausführungsbeispiele der Erfindung anhand der Zeichnung.

Es zeigen:
- Fig. 1: eine schematische Ansicht einer Ausführungsform einer erfindungsgemäßen Kühlvorrichtung; und
- Fig. 2: eine perspektivische Ansicht einer weiteren Ausführungsform einer erfindungsgemäßen Kühlvorrichtung.

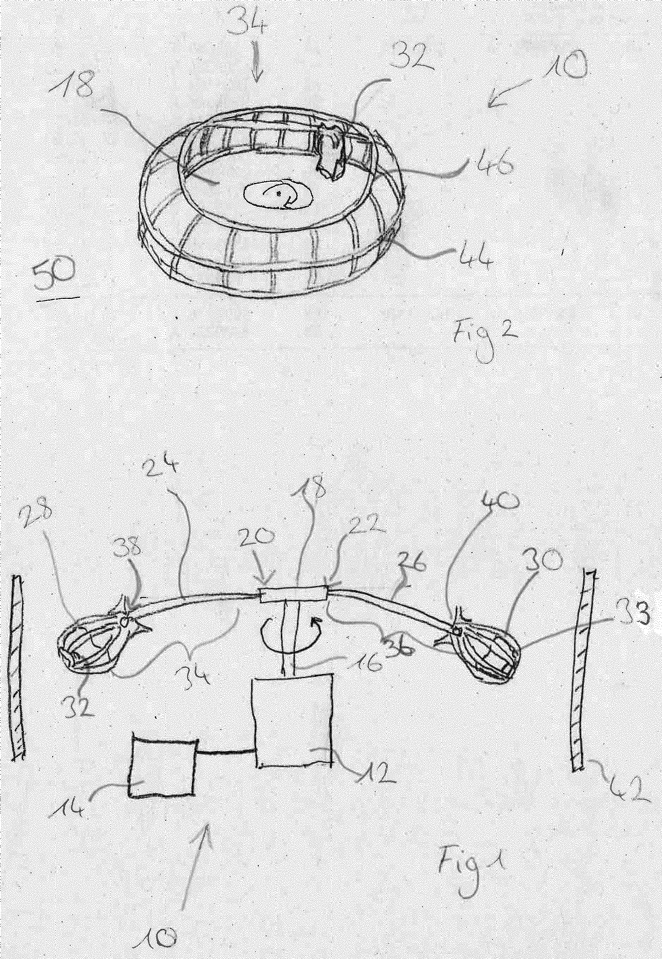

Bei der Ausführungsform gemäß Fig. 1 ist die Kühlvorrichtung 10 als Schleudervorrichtung nach der Art eines Kettenkarussells ausgebildet.

Es ist ein Antrieb 12 als Drehantrieb vorgesehen, der einen Motor aufweist, der von einer Steuervorrichtung 14 gesteuert und/oder geregelt wird. Der Antrieb 12 weist ferner eine Abtriebswelle 16 auf, die sich im Beispielsfall nach oben erstreckt und mit einem Drehteller 18 verbunden ist.

Der Drehteller weist im Beispielsfall mehrere Aufnahmen 20 und 22 für biegeschlaffe Elemente 24 und 26 auf. Diese können beispielsweise aus Draht bestehen, oder beispielsweise je aus einem Gummiband. Es kann sich auch ein Element 24 durch den Drehteller hindurch erstrecken.

An dem entfernten Ende ist jedes Element 24, 26 mit je einem Drahtgeflechtsäckchen 28 und 30 verbunden, in welchem je ein Kühlobjekt 32, 33 aufgenommen ist.

Jedes Drahtgeflechtsäckchen 28 und das zugehörige Element 24 bilden zusammen ein Halteelement 34 beziehungsweise 36.

Das Halteelement 34 und 36 ist gemäß dieser Ausführungsform auf der einen Seite mit dem Antrieb 12 und auf der anderen Seite mit dem Kühlobjekt 32, 33 verbunden oder nimmt dieses auf.

In Fig. 1 ist die erfindungsgemäße Kühlvorrichtung 10 in der dortigen Ausführungsform in einem Zustand mit einer mittleren Drehgeschwindigkeit des Antriebs 12 dargestellt. In diesem Zustand bewegen sich die Halteelemente 34 und 36 durch die Fliehkraft auch aufgrund des Gewichtes der dort aufgenommenen Kühlobjekte 32 und 33 nach außen. Die Fliehkraft zieht die Kühlobjekte nach außen, und die Schwerkraft nach unten. Aufgrund der mittleren Drehgeschwindigkeit laufen in diesem Zustand die Kühlobjekte in einem Winkel von etwa 20 Grad unterhalb der Horizontalen - bei Erhöhung der Drehgeschwindigkeit würde der Winkel nahe 0 betragen. Beim Anhalten des Antriebs 12 würden sich die Kühlobjekte mit den zugehörigen Halteelementen nach unten absenken und frei herunterhängen.

Der Betrieb der Kühlvorrichtung 10 erfolgt nun so, dass bei ausgeschaltetem Antrieb 12 die Drahtgeflechtsäckchen 28 und 30 je mit dem Kühlobjekt 32 und 33 gefüllt werden. Hierzu wird das Drahtgeflechtsäckchen an seiner Öffnung 38, 40 aufgeweitet. Das Element 24 beziehungsweise 26 ist nach der Art eines Schließbandes durch die öffnungsnahen Maschen des Säckchens gezogen. Nach Aufweitung wird je beispielsweise mittels einer temperaturfesten Greifzange das heiße Kühlobjekt 32, 33 je in das betreffende Säckchen eingelegt. Zweckmäßig verwendet die Bedienperson hier vorsorglich Schutzhandschuhe. Durch das Gewicht des Kühlobjektes 32 beziehungsweise 33 zieht sich das Schließband zu, so dass jedes Säckchen ein geschlossenes Drahtgeflecht mit großen Maschen bildet. Die Maschen sind nicht so groß und sind deutlich kleiner als das kleinste zu verwendende Kühlobjekt, beispielsweise halb so groß wie dieses.

Über die Steuervorrichtung 14 wird der Antrieb 12 nun eingeschaltet, und zwar bevorzugt zunächst vergleichsweise langsam. Die Kühlobjekte 32, 33 verlassen die herunterhängende Position und bewegen sich aufgrund der wenn auch geringen Fliehkraft leicht nach radial außerhalb.

Die frei beweglichen Elemente 24 und 26 führen dazu, dass die Kühlobjekte eine mit der Kreisbewegung überlagerte Taumelbewegung vollführen, die bewirkt, dass wechselnde Bereiche des Kühlobjekts je zuerst auf die umgebende Luft treffen.

Die Taumelbewegung kann auch durch Geschwindigkeitsänderungen des Antriebs unterstützt werden.

Wenn die Abkühlung in diesem ersten Teil des Prozesses weit genug gediehen ist, wird die Geschwindigkeit des Antriebs erhöht. Die Kühlobjekte 32 und 33 nehmen die in Fig. 1 dargestellte Position ein, in der sie schneller abkühlen, da die Drehgeschwindigkeit und damit die Geschwindigkeit, in der sie das Kühlmedium durchtreten, erhöht ist.

In dieser Position erfolgt ebenfalls für einige Minuten eine Abkühlung.

Schließlich wird die Geschwindigkeit des Antriebs 12 auf die Maximalgeschwindigkeit erhöht, so dass sich die Kühlobjekte 32 und 33 nahezu horizontal nach außen erstrecken, aufgrund der dann hohen Fliehkraft.

Wiederum nach einigen Sekunden wird dieser Teil des Kühlprozesses abgeschlossen, und der Antrieb ausgeschaltet.

Das abgekühlte Kühlobjekt 32 und 33 kann dann je ohne Schutzhandschuhe entnommen werden, nachdem es sich nahezu auf Raumtemperatur befindet.

Vorsorglich ist radial außerhalb des sich nahezu horizontal erstreckenden Halteelements 34 und 36 eine Schutzwand 42 ausgebildet, die sich kreisringförmig erstreckt und mit der etwaige Unfälle beim Lösen einzelner Teile sicher verhindert werden können.

Es versteht sich, das beliebige Modifikationen der hier dargestellten Ausführungsform möglich sind. So lässt sich beispielsweise die Anzahl der Halteelemente und Kühlobjekte beliebig wählen, von 1 beispielsweise bis 20. Der Betrieb erfolgt bevorzugt paarweise, so dass die Halteelemente bevorzugt mit zwei einander gegenüberliegenden Kühlobjekten bestückt sind. Wenn eine ungerade Anzahl von Kühlobjekten gekühlt werden soll, kann auch ein beliebiges Leerobjekt gleichen Gewichtes in das gegenüberliegende Säckchen eingelegt werden. Dies dient der Vermeidung einer Unwucht, ist jedoch nicht unbedingt erforderlich.

Auch ist es möglich, anstelle der biegeschlaffen Säckchen beliebige andere Aufnahmen zu realisieren. Zu denken ist hier beispielsweise an halbkugelförmige Siebe, die zu einer Kugel zusammenfügbar und verschließbar sind, um die Kühlobjekte aufzunehmen.

Die Kühlobjekte können einzelne Zähne sein, aber beispielsweise auch größere Dentalrestaurationsteile bis zu vielgliedrigen Brücken. Die Halteelemente können dann in entsprechender Weise ausgebildet sein, wobei es bei einer Brücke beispielsweise möglich ist, das Halteelement als Seil oder Draht zentral um die Brücke zu schlingen und dort beispielsweise fest zu knoten.

Der Drehteller 18 kann fest auf der Abtriebswelle 16 angebracht sein. Er kann auch lösbar sein oder es können mehrere Drehteller mit unterschiedlich gestalteten Halteelementen vorbereitet sein, die gegeneinander austauschbar sind, so dass je nach Art der zu kühlenden Dentalrestauration entsprechende Halteelemente zu Verfügung stehen.

Die Befestigung der Halteelemente an dem Drehteller ist in beliebiger geeigneter Weise realisiert, entweder fest oder auch lösbar, wobei es sich versteht, dass die auftretenden Fliehkräfte von den jeweiligen Aufnahmen 20 und 22 aufgenommen werden müssen.

Alternativ ist es auch möglich, die Halteelemente 34 und 36 je unmittelbar an der Abtriebswelle 16 zu befestigen, beispielsweise auch über eine Kupplung.

Eine weitere Ausführungsform einer erfindungsgemäßen Kühlvorrichtung ist aus Fig. 2 zu entnehmen. Hier weisen gleiche Bezugszeichen auf gleiche oder entsprechende Teile hin. Die Kühlvorrichtung 10 gemäß Fig. 2 weist eine Napfform auf, wobei mindestens die äußeren Bereiche durch ein weitmaschiges Gitter 44 gebildet sind. Es ist ein Kühlobjekt 32 in das Halteelement 34 eingelegt, und die Maschenweite des Gitters 44 ist so gewählt, dass sie etwa 50% der Größe des Kühlobjekts 32 beträgt.

Bei dieser Ausführungsform bildet ein Drehteller 18 als Teil des Halteelements 34 eine Abstützung für das Gitter 44. Der Drehteller 18 ist an seinem Außenrand etwas erhöht. Das Gitter 44 weist einen oberen Rand 46 auf, der nach radial einwärts gezogen ist, so dass er radial innerhalb des radialen Außenrandes des Drehtellers endet. Diese Halbtorusform gewährleistet, dass auch bei hoher Fliehkraft das Kühlobjekt 32 die Haltevorrichtung 34 nicht verlassen kann.

Der Drehteller 18 wird von einem aus Fig. 2 nicht ersichtlichen Antrieb entsprechend Fig. 1 angetrieben, und es ist auch eine entsprechende Steuervorrichtung vorgesehen.

Auch wenn der Drehteller 18 in Fig. 2 massiv dargestellt ist, versteht es sich, dass er selbst auch wie ein Sieb mit großer Maschenweite ausgebildet sein kann.

Das Gitter 44 kann verformbar sein, es kann aber auch bei den auftretenden Kräften starr sein.

Die verformbare Ausgestaltung ist bevorzugt, denn durch die Fliehkraft wölbt sich das Gitter 44 dann an der Stelle nach außen, an der ein Kühlobjekt 32 zu liegen kommt.

Im Betrieb wird nun an das heiße Kühlobjekt bei ausgeschaltetem Antrieb kurzerhand in das napfförmige Halteelement 34 eingelegt. Es kann eine beliebige Anzahl von Kühlobjekten eingelegt werden, beispielsweise auch bis zu 10, nach Möglichkeit etwas um den Umfang verteilt.

Der Antrieb 12 wird nun langsam eingeschaltet. Durch die zunehmende Fliehkraft rutschen die Kühlobjekte 32 radial nach außen, die Schrägwand des Drehtellers 18 herauf.

Die Kühlobjekte 32 geraten in den Bereich des Gitters und werden von dem Kühlmedium 50 in Form der umgebenden Luft gekühlt. Die Kühlung erfolgt zunächst noch sanft, nachdem die Geschwindigkeit des Drehantriebs 12 gering ist.

Nach der ersten Abkühlung wird die Geschwindigkeit wiederum erhöht, soweit, bis die Maximalgeschwindigkeit nach einer gewissen Zeit erreicht ist und die Kühlobjekte 32 auch nahezu auf Raumtemperatur abgekühlt sind.

Durch Geschwindigkeitswechsel ändern die Kühlobjekte 32 ihre Position im Gitter 44, was dazu führt, dass sich wechselnde Bereiche heben, an denen die Kühlobjekte je zuerst auf das Kühlmedium treffen.

Um eine Taumelbewegung sicher zu realisieren, kann auch eine so genannte Taumelscheibe in den Antrieb 12 eingebaut sein, die eine Art Schlingerbewegung des Drehtellers 18 beim Drehen bewirkt.

Bei Bedarf kann auch bei der Ausführungsform gemäß Fig. 2 radial außerhalb eine zusätzliche Schutzwand vorsorglich vorgesehen sein.

Die erfindungsgemäße Kühlvorrichtung für ein zu kühlenden Kühlobjekt weist einen Antrieb 12 auf, welcher wechselnde Bereiche des Kühlobjekts 32, 33 je zuerst auf das Kühlmedium 50 treffen lässt.

## Patentansprüche

1. Kühlvorrichtung, mit einem zu kühlenden Kühlobjekt,z.B. mit einer Dentalrestauration, insbesondere aus einer Keramik, und mit einem Kühlmedium, das in thermischen Kontakt mit dem Kühlobjekt bringbar ist, **dadurch gekennzeichnet, dass** die Kühlvorrichtung (10) das Kühlobjekt durch das Kühlmedium (50) bewegt.

2. Kühlvorrichtung, insbesondere für Dentalrestaurationen, mit einem zu kühlenden Kühlobjekt, wie z.B. mit einer Dentalrestauration, insbesondere aus einer Keramik, und mit einem Kühlmedium, das in thermischen Kontakt mit dem Kühlobjekt bringbar ist, **dadurch gekennzeichnet, dass** die Kühlvorrichtung (10) einen Antrieb (12) aufweist, insbesondere einen Drehantrieb (12), der eine Bewegung des Kühlobjekts (32, 33) gegenüber dem gasförmigen Kühlmedium (50) einleitet.

3. Kühlvorrichtung nach Anspruch 1 oder 2, **dadurch gekennzeichnet, dass** das Kühlmedium (50) ruhende oder im wesentlichen ruhende Luft ist und dass das Kühlobjekt (32) mit einem insbesondere biegeschlaffen Halteelement (34, 36) in der Luft bewegbar ist.

4. Kühlvorrichtung nach Anspruch 3, **dadurch gekennzeichnet, dass** ein Antrieb (12) für das Kühlobjekt (32, 33), insbesondere ein Drehantrieb, der an dem biegeschlaffen Halteelement (34, 36) angebracht ist, dieses, insbesondere frei taumelnd, durch das Kühlmedium (50) zieht.

5. Kühlvorrichtung nach Anspruch 4, **dadurch gekennzeichnet, dass** der Antrieb (12) für die Vornahme von Bewegungen im Raum, insbesondere unter Nachschleppen des Halteelements (34, 36) und damit des Kühlobjekts (32, 33) ausgebildet ist.

6. Kühlvorrichtung nach einem der Ansprüche 2 bis 5, **dadurch gekennzeichnet, dass** der Antrieb (12) kreisförmige und/oder achtförmige Bewegungen ausführt, die zum Schwingen, Drehen und Taumeln mindestens eines Teils der Halteelements und/oder des Kühlobjektes (32, 33) führen.

7. Kühlvorrichtung nach einem der vorhergehenden Ansprüche , **dadurch gekennzeichnet, dass** ein Antrieb (12) für die Bewegung des Kühlobjekts (32, 33) ein manueller Antrieb (12), ein Federantrieb oder ein motorisch betätigter Drehantrieb (12) ist, und dass der Antrieb (12) eine hinsichtlich der Richtung in mindestens 2 Dimensionen verteilte Relativbewegung zwischen dem Kühlobjekt (32, 33) und dem gasförmigen Kühlmedium (50) einleitet, und/oder dass das Kühlobjekt (32,33) sich bei laufendem Antrieb (12) durch Zentrifugalkraft radial nach außen bewegt oder radial nach außen gleitet, geführt durch das Halteelement (34,36).

8. Kühlvorrichtung nach einem der vorhergehenden Ansprüche, **dadurch gekennzeichnet, dass** das Kühlobjekt (32, 33) in oder an dem Halteelement (34, 36) auch bei eingeschaltetem Antrieb (12) unverlierbar aufgenommen ist.

9. Kühlvorrichtung nach einem der vorhergehenden Ansprüche, **dadurch gekennzeichnet, dass** das Halteelement (34, 36) auf seiner dem Kühlobjekt (32, 33) benachbarten Seite einen gut luftdurchlässigen Aufnahmeplatz, insbesondere aus einem hitzefesten Geflecht oder Gitter (44), aufweist.

10. Kühlvorrichtung nach einem der vorhergehenden Ansprüche, **dadurch gekennzeichnet, dass** das Halteelement (34, 36) als stark luftdurchlässiger Drehteller (18) ausgebildet ist, der mindestens an seinem Tellerrand ein Geflecht oder Gitter (44) aufweist und dessen Tellerrand sich aufwärts erstreckt und das Kühlobjekt (32, 33) bei Kühlen abstützt.

11. Kühlvorrichtung nach einem der vorhergehenden Ansprüche, **dadurch gekennzeichnet, dass** ein Geflecht oder Gitter (44) des Halteelements (34,36) nachgiebig ist und sich beim Drehantrieb (12) durch die Zentrifugalkraft, zusammen mit dem Kühlobjekt (32, 33) radial nach außen auswölbt.

12. Kühlvorrichtung nach einem der vorhergehenden Ansprüche, **dadurch gekennzeichnet, dass** eine Steuervorrichtung (14) für den Antrieb (12) vorgesehen ist, die ein Halteelement (34, 36) und damit das Kühlobjekt (32, 33) allmählich beschleunigt, insbesondere über je mehr als 10 Sekunden Beschleunigungszeit.

13. Kühlvorrichtung nach einem der vorhergehenden Ansprüche, **dadurch gekennzeichnet, dass** eine Steuervorrichtung (14) für den Antrieb (12) vorgesehen ist, die den Antrieb (12) während des Kühlens beschleunigt und abbremst, insbesondere periodisch, und so wechselnde Bereiche des Kühlobjekts (32, 33) je zuerst auf das Kühlmedium (50) treffen lässt.

14. Verfahren zum Betrieb einer Kühlvorrichtung, bei welchem ein Kühlobjekt, insbesondere mindestens eine Dentalrestauration, zu kühlen ist, und bei welchem ein Kühlmedium in thermischem Kontakt mit dem Kühlobjekt gebracht wird, **dadurch gekennzeichnet, dass** die Kühlvorrichtung (10) das Kühlobjekt (32, 33) gegenüber dem gasförmigen Kühlmedium (50) mittels eines Antriebs (12) bewegt, insbesondere mittels eines Drehantriebs (12).

15. Verfahren nach Anspruch 14, **dadurch gekennzeichnet, dass** das Kühlobjekt (32, 33) während des Kühlvorgangs von einem Halteelement (34,36) nur lose gehalten wird und in Raumrichtungen ungleich der Radialrichtung des Drehantriebs (12) frei beweglich ist.

## Geänderte Patentansprüche

### Geänderte Patentansprüche gemäss Regel 137(2) EPÜ.

1. Kühlvorrichtung für ein zu kühlendes Kühlobjekt, z.B. eine Dentalrestauration, insbesondere aus einer Keramik, mit einem Kühlmedium (50), das in thermischen Kontakt mit dem Kühlobjekt bringbar ist, wobei die Kühlvorrichtung (10) dazu ausgebildet ist, das Kühlobjekt durch das Kühlmedium (50) zu bewegen, **dadurch gekennzeichnet, dass** das Kühlmedium (50) ruhende oder im Wesentlichen ruhende Luft ist, wobei das Kühlobjekt (32) mit einem biegeschlaffen Halteelement (34, 36) in der Luft bewegbar ist.

2. Kühlvorrichtung nach Anspruch 1, **dadurch gekennzeichnet, dass** das zu kühlende Kühlobjekt eine Dentalrestauration, insbesondere aus einer Keramik, ist, wobei das Kühlmedium, das in thermischen Kontakt mit dem Kühlobjekt bringbar ist, ein gasförmiges Kühlmedium (50) Ist, und wobei die Kühlvorrichtung (10) einen Antrieb (12), insbesondere einen Drehantrieb (12), aufweist, so dass eine Bewegung des Kühlobjekts (32, 33) gegenüber dem gasförmigen Kühlmedium (50) einleitbar ist.

3. Kühlvorrichtung nach Anspruch 1 oder 2, **dadurch gekennzeichnet, dass** der Drehantrieb (12), der an dem biegeschlaffen Halteelement (34, 36) angebracht ist, geeignet ist, dieses frei taumelnd durch das Kühlmedium (50) zu ziehen.

4. Kühlvorrichtung nach Anspruch 3, **dadurch gekennzeichnet, dass** der Antrieb (12) für die Vornahme von Bewegungen im Raum, insbesondere unter Nachschleppen des Halteelements (34, 36) und damit des Kühlobjekts (32, 33) ausgebildet ist.

5. Kühlvorrichtung nach einem der vorhergehenden Ansprüche, **dadurch gekennzeichnet, dass** mit dem Antrieb (12) kreisförmige und/oder achtförmige Bewegungen ausführbar sind, die zum Schwingen, Drehen und Taumeln mindestens eines Teils des Halteelements und/oder des Kühlobjektes (32, 33) führen.

6. Kühlvorrichtung nach einem der vorhergehenden Ansprüche, **dadurch gekennzeichnet, dass** der Antrieb (12) für die Bewegung des Kühlobjekts (32, 33) ein manueller Antrieb (12), ein Federantrieb oder ein motorisch betätigter Drehantrieb (12) ist, und dass der Antrieb (12) dazu konfiguriert ist, eine hinsichtlich der Richtung in mindestens zwei Dimensionen verteilte Relativbewegung zwischen dem Kühlobjekt (32, 33) und dem gasförmigen Kühlmedium (50) einzuleiten, und/oder dass das Kühlobjekt (32,33) bei laufendem Antrieb (12) durch Zentrifugalkraft radial nach außen bewegbar ist oder radial nach außen, geführt durch das Halteelement (34,36), gleitbar ist.

7. Kühlvorrichtung nach einem der vorhergehenden Ansprüche, **dadurch gekennzeichnet, dass** das Kühlobjekt (32, 33) in oder an dem Halteelement (34, 36) auch bei eingeschaltetem Antrieb (12) unverlierbar aufgenommen ist.

8. Kühlvorrichtung nach einem der vorhergehenden Ansprüche, **dadurch gekennzeichnet, dass** das Halteelement (34, 36) auf seiner dem Kühlobjekt (32, 33) benachbarten Seite einen luftdurchlässigen Aufnahmeplatz, insbesondere aus einem hitzefesten Geflecht oder Gitter (44), aufweist.

9. Kühlvorrichtung nach einem der vorhergehenden Ansprüche, **dadurch gekennzeichnet, dass** das Halteelement (34, 36) als luftdurchlässiger Drehteller (18) ausgebildet ist, der mindestens an seinem Tellerrand ein Geflecht oder Gitter (44) aufweist und dessen Tellerrand sich aufwärts erstreckt und das Kühlobjekt (32, 33) bei Kühlen abstützt.

10. Kühlvorrichtung nach einem der vorhergehenden Ansprüche, **dadurch gekennzeichnet, dass** ein Geflecht oder Gitter (44) des Halteelements (34,36) nachgiebig ist und beim Drehantrieb (12) durch die Zentrifugalkraft, zusammen mit dem Kühlobjekt (32, 33) radial nach außen auswölbar ist.

11. Kühlvorrichtung nach einem der vorhergehenden Ansprüche, **dadurch gekennzeichnet, dass** eine Steuervorrichtung (14) für den Antrieb (12) vorgesehen ist, die geeignet Ist, ein Halteelement (34, 36) und damit das Kühlobjekt (32, 33) allmählich, insbesondere über je mehr als 10 Sekunden Beschleunigungszeit zu beschleunigen.

12. Kühlvorrichtung nach einem der vorhergehenden Ansprüche, **dadurch gekennzeichnet, dass** eine Steuervorrichtung (14) für den Antrieb (12) vorgesehen ist, die geeignet ist, den Antrieb (12) während des Kühlens, insbesondere periodisch zu beschleunigen und abzubremsen, und so wechselnde Bereiche des Kühlobjekts (32, 33) je zuerst auf das Kühlmedium (50) treffen zu lassen.

13. Verfahren zum Betrieb einer Kühlvorrichtung, bei welchem ein Kühlobjekt, insbesondere mindestens eine Dentalrestauration, zu kühlen ist, und bei welchem ein Kühlmedium, welches ein gasförmiges Kühlmedium ist, in thermischem Kontakt mit dem Kühlobjekt gebracht wird, wobei die Kühlvorrichtung (10) das Kühlobjekt (32, 33) gegenüber dem gasförmigen Kühlmedium (50) mittels eines Antriebs (12), insbesondere mittels eines Drehantriebs (12), bewegt, **dadurch gekennzeichnet, dass** das Kühlmedium (50) ruhende oder Im Wesentlichen ruhende Luft ist und dass das Kühlobjekt (32) mit einem biegeschlafen Halteelement (34, 36) in der Luft bewegt wird.

14. Verfahren nach Anspruch 13, **dadurch gekennzeichnet, dass** das Kühlobjekt (32, 33) während des Kühlvorgangs von einem Halteelement (34,36) nur lose gehalten wird und in Raumrichtungen ungleich der Radialrichtung des Drehantriebs (12) frei beweglich ist.
